# EUROPEAN PATENT APPLICATION

(11) **EP 2 305 779 A2**
(43) Date of publication of application: **06.04.2011**
(21) Application number: 10183804.3
(22) Date of filing: 30.09.2010
(51) Int. Cl.: C10G 21/06, C10G 21/20

(54) **Method for desulfurization of hydrocarbon oils**

(30) Priority: 30.09.2009 US 570042
(71) Applicant: General Electric Company, Schenectady, NY 12345 (US)
(72) Inventor: Haitko, Deborah Ann, Schenectady, NY 12309 (US); Osaheni, John Aibangbee, Niskayuna, NY 12309 (US); Soloveichik, Grigorii Lev, Niskayuna, NY 12309 (US)
(74) Representative: Gray, Thomas

(57) **Abstract**

Provided herein are processes for desulfurization of a hydrocarbon oil. The processes (100) comprise providing a hydrocarbon oil comprising sulfur impurities (101) and mixing the oil with a phase transfer agent and a source of hypochlorite ions to provide a mixture (102). The mixture separates into an aqueous hypochlorite phase and a nonpolar oil phase (103). The hypochlorite phase may then be removed from the oil phase, and the oil phase centrifuged and separated from any precipitate, thereby providing a cleaned oil phase.

## Description

### BACKGROUND

Petroleum is the world's main source of hydrocarbons used as fuel and petrochemical feedstock. Because of the presence of impurities, crude oil is seldom used in the form produced at the well, but rather, is typically converted in oil refineries into the wide range of fuels and petrochemicals appropriate for their intended end-use applications.

While compositions of natural petroleum or crude oils vary significantly, all crudes contain sulfur compounds. Generally, sulfur concentrations in crude oils range from about 0.5 to about 1.5 percent, but may deviate upwardly to up to about 8 percent. When combusted, sulfur containing compounds are converted to sulfur oxides (SOx), considered to be an environmental pollutant. Catalytic oxidation of sulfur and the subsequent reaction thereof with water can result in the formation of sulfuric acid mist, thereby also contributing to particulates emission. And so, such crudes typically must be desulfurized to yield products, which meet performance specifications and/or environmental standards.

In fact, it is likely that sulfur removal from petroleum feedstocks and products will become increasingly important in years to come. While legislation on sulfur in diesel fuel, for example, in Europe, Japan and the US has recently lowered the specification for on-road vehicles from 0.05 to 0.001 (EU) or 0.0015 (US) percent by weight, indications are that future specifications may go below this level and include off-road vehicles.

A variety of methods have been reported to reduce the amount of sulfur in crude oil. Some of these include one or more of the use of ozone, or peroxides, either alone, or in the presence of molybdenum or tungsten metal catalysts. However, the use of peroxide and ozone can introduce undesirable handling issues into the manufacturing environment, and both are expensive. Adding molybdenum and tungsten catalysts does increase the percentage of sulfur removable by peroxide processes, but adds to the cost, in some applications, prohibitively.

Efficient, more cost effective, methods for removal of sulfur compounds from hydrocarbon oils are thus needed. The usefulness of such methods could be further leveraged if they required only mild conditions, so that implementation in manufacturing environments would not introduce substantial handling issues.

### BRIEF DESCRIPTION

Provided herein are processes for desulfurization of a hydrocarbon oil and oil distillates. The processes comprise providing a hydrocarbon oil comprising sulfur impurities and mixing the hydrocarbon oil with a phase transfer agent and a source of hypochlorite ion source to provide a mixture. The mixture is allowed to separate into an aqueous hypochlorite phase and a non-polar oil phase and the phases separated from each other.

### DRAWINGS

There follows a detailed description of embodiments of the invention by way of example only with reference to the accompanying drawings, in which:
FIG. 1 is is a flow chart schematically illustrating one embodiment of the present process;
FIG. 2 is a flow chart schematically illustrating another embodiment of the present process;
FIG. 3 is a flow chart schematically illustrating another embodiment of the present process;
FIG. 4 is a flow chart schematically illustrating another embodiment of the present process;
FIG. 5 is a flow chart schematically illustrating another embodiment of the present process;
FIG. 6 is a flow chart schematically illustrating another embodiment of the present process;
FIG. 7 is a flow chart schematically illustrating another embodiment of the present process; and
FIG. 8 is a flow chart schematically illustrating another embodiment of the present process.

### DETAILED DESCRIPTION

Unless defined otherwise, technical and scientific terms used herein have the same meaning as is commonly understood by one of skill in the art to which this invention belongs. The terms "first", "second", and the like, as used herein do not denote any order, quantity, or importance, but rather are used to distinguish one element from another. Also, the terms "a" and "an" do not denote a limitation of quantity, but rather denote the presence of at least one of the referenced item, and the terms "front", "back", "bottom", and/or "top", unless otherwise noted, are merely used for convenience of description, and are not limited to any one position or spatial orientation. If ranges are disclosed, the endpoints of all ranges directed to the same component or property are inclusive and independently combinable (e.g., ranges of "up to about 25 wt.%, or, more specifically, about 5 wt.% to about 20 wt.%," is inclusive of the endpoints and all intermediate values of the ranges of "about 5 wt.% to about 25 wt.%," etc.). The modifier "about" used in connection with a quantity is inclusive of the stated value and has the meaning dictated by the context (e.g., includes the degree of error associated with measurement of the particular quantity).

Provided herein are processes for desulfurization of hydrocarbon oil and/or oil distillates. The processes comprise mixing the hydrocarbon oil or the oil distillate with a phase transfer agent and source of hypochlorite ions to provide a mixture. The mixture separates into an aqueous hypochlorite phase and a non-polar oil phase. The hypochlorite phase is then removed from the treated oil phase, and, if desired, the oil phase centrifuged and separated from any precipitate, thereby providing a clean oil phase.

The processes disclosed herein may advantageously be applied to any hydrocarbon oil or oil distillate, or mixture of one or more hydrocarbon oils and/or oil distillates, comprising sulfur impurities. As those of ordinary skill in the art are aware, hydrocarbon oils are normally classified into 6 classes, according to the oil's boiling point, purpose and composition. The boiling point, ranging from about 175°C to about 600°C, and carbon chain length, ranging from about 20 carbon atoms to about 70 carbon atoms, of the oil increases with the fuel oil number. Viscosity also increases with fuel oil number and the heaviest oil, fuel oil no. 6, typically must be heated in order to flow.

Exemplary hydrocarbon oils suitable for the present invention include any of fuel oil nos 1-6 regardless of their source, for example, petroleum, liquid oils obtained from bitumen (often called tar sands or oil sands), oil shale, or coal, as well as synthetic crude oils produced by the liquefaction of coal, heavy crude oils, and petroleum refinery residual oil fractions, such as bottoms or fractions produced by atmospheric and vacuum distillation of crude oil.

Examples of oil distillates include in particular, No. 1 fuel oil, No. 2 fuel oil and No. 3 fuel oil, which may also be referred to as distillate fuel oils, diesel fuel oils, light fuel oils, or gasoil. For example, No. 2 fuel oil, No. 2 distillate and No. 2 diesel fuel oil are approximately the same, with diesel differing only in that it also has a cetane number limit which described ignition quality of the fuel. Hydrocarbon oils comprising high levels of sulfur impurities, such as Saudi oils, e.g., typically having sulfur contents of greater than 3 wt%, or Coker oils, can find particular benefit from application of the present processes.

The hydrocarbon oil desirably desulfurized by the present process is mixed with a phase transfer agent. A phase transfer agent is an agent which can facilitate the migration of a reactant, in this case the sulfur impurities, in a heterogeneous system from one phase, e.g., the oil phase, into another phase, e.g., the hypochlorite ion phase, where the desired reaction can take place. As such, suitable phase transfer agents may typically facilitate the separation of any sulfur impurities from the hydrocarbon oil, while the hypochlorite ion source may typically oxidize the sulfur impurities to form, e.g., sulfones. Some phase transfer agents may also function as catalysts, i.e., may facilitate the acceleration of the reaction of the hypochlorite ion source with any sulfur impurities within the hydrocarbon oil, typically once the sulfur impurities have migrated into the phase comprising the hypochlorite ion source.

Any phase transfer agent may be used, whether or not also active as a catalyst, and many of these, including those that are cationic, anionic or nonionic, are known to those of ordinary skill in the art. Cationic, anionic and nonionic surfactants, for example, can act as phase transfer agents, and any of these may be used in the present process. In some embodiments, cationic phase transfer agents, such as quaternary ammonium salts, quaternary phosphonium salts and crown ethers, may desirably be used. Particular examples of these include, but are not limited to, tetrabutyl ammonium bromide, tetrabutyl ammonium hydrogen sulfate, tributylmethyl ammonium chloride, benzyltrimethyl ammonium chloride, benzyltriethyl ammonium chloride, methyltricaprylyl ammonium chloride, dodecyltrimethyl ammonium bromide, tetraoctyl ammonium bromide, cetyltrimethyl ammonium chloride, trimethyloctadecyl ammonium hydroxide, and hexaethylguanidinium bromide. Quaternary ammonium halides are particularly suitable for use in some embodiments, and of these, cetyltrimethylammonium bromide (CETAB) and tetrabutylammonium bromide (TBAB) are particularly well suited.

Any amount of the phase transfer agent may be utilized, but at a minimum, the amount utilized will facilitate the migration of any sulfur impurities within the hydrocarbon oil into a phase comprising the hypochlorite ion source. Such amounts are expected to include amounts as low as about 0.01 wt% (based on amount of the hypochlorite ion source. Further, the amount of the phase transfer agent to be used is not particularly limited, and may only be limited by practical considerations. Generally speaking then, useful amounts of the phase transfer agent are expected to range from about 0.01 wt% to about 1.0 wt%, or from about 0.05 wt% to about 0.8wt%, or from about 0.05 wt% to about 0.5 wt% .

The phase transfer agent may desirably be provided as, and added to, the hydrocarbon oil, as a solution. If the same is desired, any solvent for the phase transfer agent may be used, and selection of the same will thus necessarily depend on the phase transfer agent selected. Any solvent utilized will also desirably not interfere with ability of the phase transfer agent to facilitate the migration of any sulfur impurities within the hydrocarbon oil into a phase comprising the hypochlorite ion source and/or the reaction between the hypochlorite ion source and sulfur compounds within the hydrocarbon oil.

Examples of suitable solvents for the phase transfer agent generally include aprotic polar solvents such as acetonitrile, nitromethane, water, or combinations of these. However, any solvent in which the desired amount of phase transfer agent is soluble may be utilized. Further, the solubility of the phase transfer agent within the solvent may be facilitated by, e.g., heating the solvent, so that solvents in which the phase transfer agent exhibits a lower solubility than those listed above can be utilized, if desired. In some embodiments, water is particularly well suited for use, and advantageously is readily available and cost effective. However, it is to be understood that, within the context of the present application, the particular solvent utilized, if any, is not critical. What is important is that an effective amount of the phase transfer agent is brought into contact, however said contact is achieved, with any sulfur impurities in the hydrocarbon oil so the phase transfer agent can facilitate the migration of the sulfur impurities from the hydrocarbon oil into the hypochlorite ion phase.

If provided in solution, the phase transfer agent is provided in the desired solvent in a concentration of from about 0.05 wt% to about 1.0 wt%, or from about 0.1 wt% to about 0.8 wt%, or from about 0.1 wt% to about 0.6 wt%.

Advantageously, a hypochlorite ion source is provided, and may be added to the hydrocarbon oil, phase transfer agent, and/or mixture comprising the hydrocarbon oil and phase transfer agent. That is, the hypochlorite ion source may be added directly to the hydrocarbon oil prior to the addition of the phase transfer agent, may be added to the phase transfer agent prior to mixing with the hydrocarbon oil, or, may be added to the mixture once the phase transfer agent and hydrocarbon oil have been placed in contact, or combinations of these. Suitable hypochlorite sources include those capable of oxidizing at least a portion of the sulfur compounds within the hydrocarbon oil. Examples of such hypochlorite ion sources include sodium hypochlorite, calcium hypochlorite, potassium hypochlorite, and hypochlorous acid.

After the hypochlorite ion source and/or phase transfer agent is added to the hydrocarbon oil/mixture, the mixture may desirably be agitated to facilitate contact of the components thereof. That is, the mixture may be sonicated, vibrated, centrifuged, or may simply be shaken.

The present process desirably removes a substantial portion of any sulfur containing impurities within the hydrocarbon oil, as may be present in the oil naturally, or, as may be created as residue from atmospheric/vacuum distillation processes. Typical sulfur containing impurities present in hydrocarbon oils, and desirably removed by the present process include, but are not limited to, organic sulfur-containing compounds, such as alkyl sulfides or aromatic sulfur containing compounds. Examples of organic sulfur-containing compounds that may typically contaminate hydrocarbon oil and oil distillates, and that are desirably removed therefrom, include thiophene and its derivatives. Exemplary derivatives of thiophene include various substituted benzothiophenes, dibenzothiophenes, phenanthrothiophenes, benzonapthothiophenes, thiophene sulfides, and the like.

Advantageously, added heat and pressure are not necessary for carrying out the present process. However, application of either or both may facilitate either or both of the reaction of the phase transfer agent with any sulfur containing impurities within the hydrocarbon oil, and/or dissolution of any sulfones created by the reaction therebetween within the hypochlorite ion source, and so, the present process may optionally include the same. If so desired, the hydrocarbon oil, phase transfer agent/solution, hypochlorite ion source, and/or mixture may be provided with a temperature of at least about 15°C, or from about 20°C to about 50°C, or even from about 20°C to about 35°C. The hydrocarbon oil, phase transfer agent/solution, hypochlorite ion source, and/or mixture may also be provided with a pressure of at least about 1 atmosphere, or from about 1 atmosphere to about 5 atmospheres, or even from about 1 atmosphere to about 2 atmospheres.

Once all of the components have been added to a mixture comprising the hydrocarbon oil, phase transfer agent/solution and hypochlorite ion source and agitated, the mixture will typically separate into two phases - a hydrocarbon oil phase, and an aqueous phase containing the hypochlorite ion source and the reaction products of the reaction between the hypochlorite ion source and any sulfur impurities in the hydrocarbon oil. Such reaction products may typically comprise chloride ions and sulfones. These two layers are then desirably separated so that the clean hydrocarbon oil may be further processed, if desired. More particularly, the layers may be separated by any suitable method or apparatus known in the art, such as by decantation, centrifugation or using a separatory funnel or a mixer-settler.

Thereafter, the hydrocarbon oil treated by the disclosed process may be delivered to a point-of-use, or, may be subjected to further processing, or to be re-treated via one or more steps of the disclosed process. Similarly, and once separated from the biphasic mixture, the hypochlorite ion source may be recycled either for use in the present process, or downstream processes.

The hydrocarbon oil may be retreated by all or a portion of the present process. As would be appreciated by one skilled in the art, the number of times the process is performed can be dependent on the desired purity of the final hydrocarbon product, and one or more of the contacting steps can be repeated until the desired purity has been substantially achieved. Or, in another exemplary embodiment, the treated oil can have added thereto an additional amount of a polar solvent, which is expected to be capable of solubilizing at least a portion of any remaining reaction products from the oxidation/reaction of sulfur impurities by/with the hypochlorite ion source. If the same is desired, any aprotic polar solvent may be utilized, including those listed above in connection the discussion of a solvent for the phase transfer agent, i.e., acetonitrile, nitromethane, water, or combinations of these. The oil/solvent mixture may be agitated, if desired, and then allowed to separate into a solvent phase and an oil phase.

The present process is expected to be less costly and complicated than conventional processes for the removal of sulfur impurities from hydrocarbon oils, such as for example, hydrodesulfurization. Further, the present process makes use of materials that are readily and economically available in bulk quantities. And, the materials used in the process do not present significant handling and safety issues, at least relative to materials used in conventional desulfurization processes, e.g., peroxides and ozone.

The disclosed process is capable of removing substantially all of the sulfur impurities from hydrocarbon oil (e.g. to a level of less than about 1% by weight) from a hydrocarbon oil having greater than 3% sulfur content. Aspects of the present invention are particularly useful for gas turbine applications where it is often desirable to lower the sulfur impurity content from 4% by weight sulfur (or greater) to less than about 1% by weight sulfur.

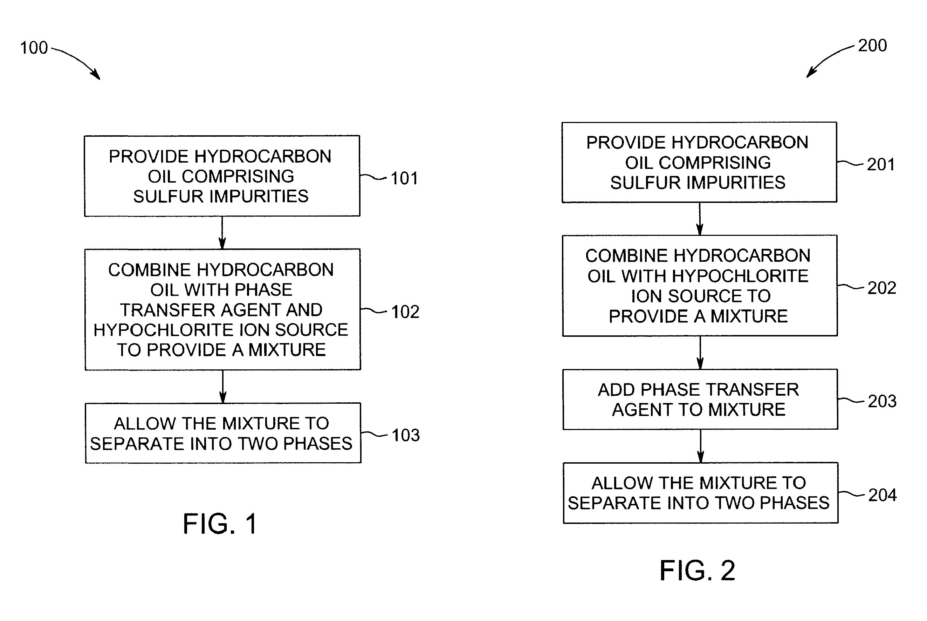

Referring now to FIG. 1, one embodiment of the disclosed process for removing sulfur impurities from hydrocarbon oil is shown in flow chart form. More specifically, FIG. 1 shows process 100, wherein hydrocarbon oil comprising sulfur impurities is provided at step 101. The sulfur impurities capable of being removed by process 100 include one or more of alkyl- and arylsulfides, thiophenes, benzothiphenes, and dibenzothiophenes..

The hydrocarbon oil is combined with a phase transfer agent, or phase transfer agent solution, and a hypochlorite ion source as shown at step 102. The phase transfer agent will desirably be one capable of facilitating the migration of any sulfur impurities within the hydrocarbon oil into a phase comprising the hypochlorite ion source. Typically, phase transfer agents so capable can include cationic, anionic or nonionic surfactants, and include in particular, cationic quaternary ammounium salts, e.g. quaternary ammonium halides such as cetyltrimethylammonium bromide (CETAB) and tetrabutylammonium bromide (TBAB). The phase transfer agent may desirably be provided in solution with a polar solvent, such as, e.g., water. The ratio of the polar solvent to the phase transfer agent will depend upon the phase transfer agent and polar solvent selected, and may be, e.g., from about 100:1 1 to about 10: 1.

The hypochlorite ion source will desirably be one capable of oxidizing, or otherwise reacting with, any sulfur impurities in the oil. Any source of a hypochlorite ion may be used, including sodium hypochlorite or calcium hypochlorite, for example. The mixture is then allowed to separate into two phases at step 103, i.e., an aqueous hypochlorite phase and a non-polar oil phase.

The components of the mixture can be combined in any order, as is illustrated further by the embodiment of the present process shown in FIG. 2. As shown in FIG. 2, process 200 comprises providing the hydrocarbon oil to be desulfurized, at step 201. In the embodiment shown in FIG. 2, at step 202, the hypochlorite ion source is added to the hydrocarbon oil to provide a mixture, and the phase transfer agent/solution added thereto at step 203. The mixture is then allowed to separate into two phases at step 204.

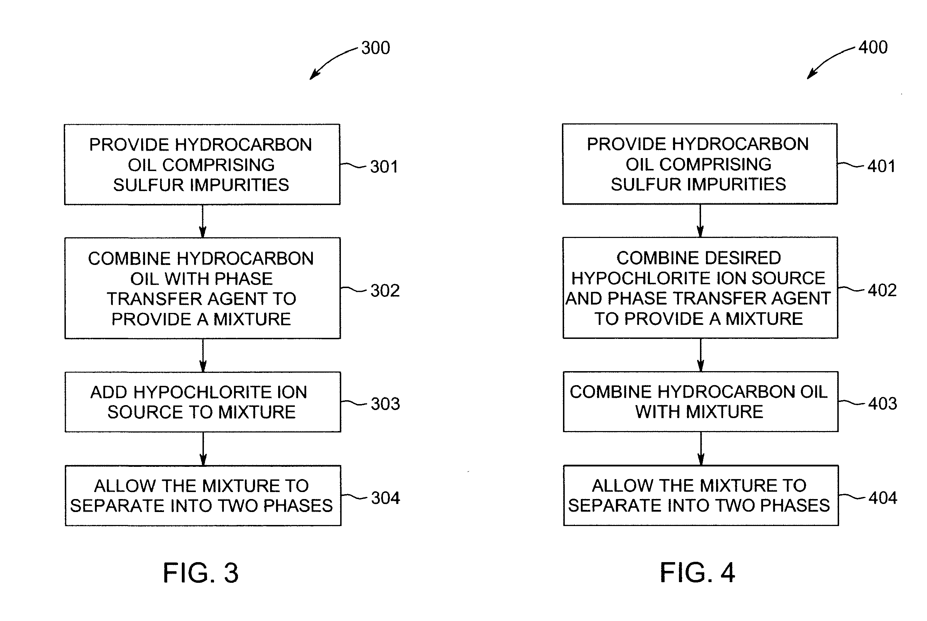

Or, as shown in FIG 3, the process 300 may comprise combining the hydrocarbon oil with the desired phase transfer agent to provide a mixture at step 302, and then, at step 303, adding the hypochlorite ion source to the mixture. The mixture may then be allowed to separate into two phases, as shown at step 304.

Or, as shown in FIG 4, process 400 may comprise combining the desired hypochlorite ion source with the desired phase transfer agent to provide a mixture at step 402. The hydrocarbon oil may then be added to the mixture at step 403, and the mixture allowed to separate into phases, as shown at step 404.

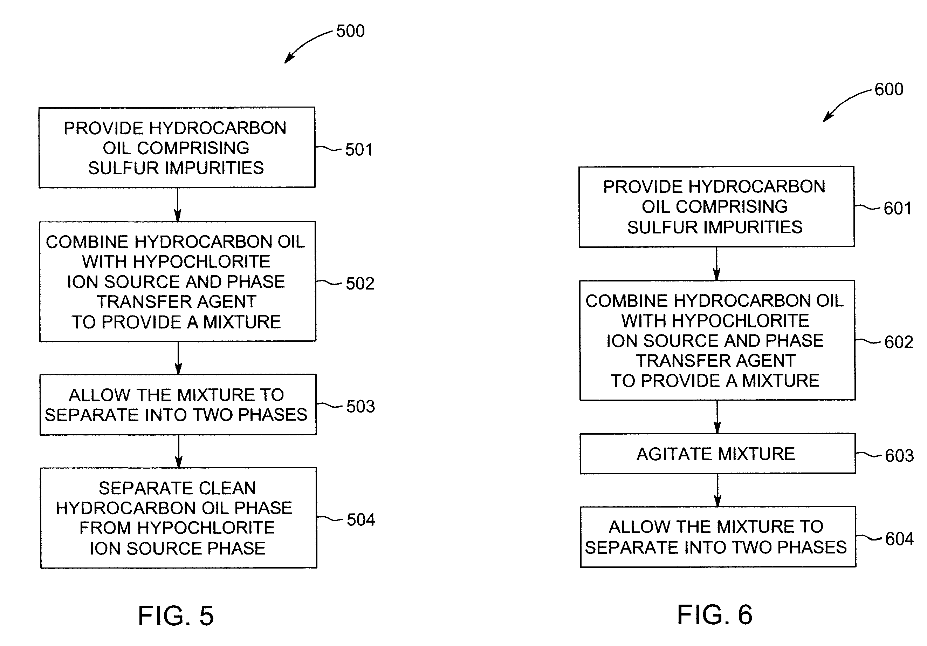

The present process may also comprise removing the cleaned hydrocarbon oil from the mixture, as shown in FIG. 5. More particular, and as shown in FIG. 5, process 500 may comprise providing a hydrocarbon oil desirably subjected to the present process at step 501. The hydrocarbon oil is combined with the desired hypochlorite ion source and phase transfer agent to provide a mixture at step 502. A mixture is then allowed to separate into two phases, as expected to occur upon standing for e.g., 5 minutes, at step 503. The two phases, a clean hydrocarbon oil phase and a hypochlorite ion source phase, may then be separated, as by decantation, as shown at step 504.

In order to facilitate contact among the components of the mixture, the mixture may be agitated after each addition. One such embodiment is shown in FIG. 6, wherein process 600 comprises providing a hydrocarbon oil having sulfur impurities desirably removed therefrom at step 601. At step 602, the hydrocarbon oil is combined with the desired hypochlorite ion source and phase transfer agent to provide a mixture. The mixture is then agitated at step 603. The agitation can be provided by any suitable method known in the art, such as, e.g., sonication, vibration, centrifugation, manual shaking, and the like. The mixture is then allowed to separate into phases at step 604.

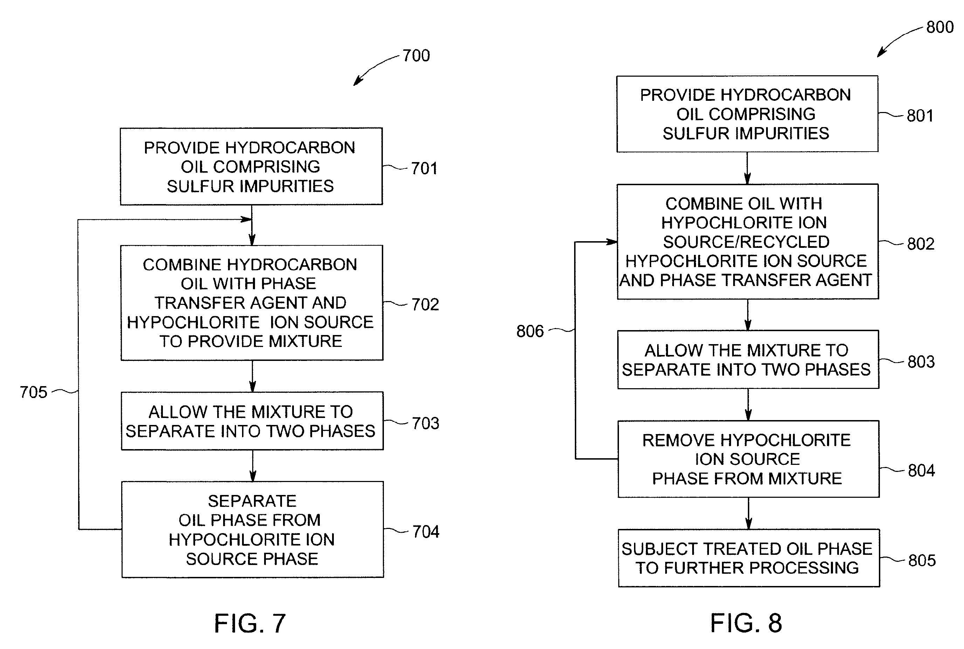

In some embodiments, it may be desirable to repeat certain steps of the present process. Repetition of the process can further reduce the amount of sulfur impurities in the hydrocarbon oil so that more pure fractions may be obtained, or cruder grades of hydrocarbon oils may be started with. One such embodiment is shown in FIG. 7, wherein once the phases are separated at step 704, the hydrocarbon oil is recycled through the process. That is, the clean hydrocarbon oil phase separated at step 704 from the hypochlorite ion source phase is once again combined with a phase transfer agent and hypochlorite ion source to provide a mixture as shown at step 702, and then the mixture allowed to separate into two phases, as shown at step 703. The phases are then separated again at step 704 and the clean hydrocarbon oil can either be recycled again through the process as shown at step 705, subjected to further processing, or dispensed to a point-of-use.

Or, once the phases are separated from each other, the hypochlorite ion source may be recycled and reused in the process as shown in FIG 8. As shown, process 800 involves providing a hydrocarbon oil comprising sulfur impurities at step 801, and combining the hydrocarbon oil with a hypochlorite ion source/recycled hypochlorite ion source and phase transfer agent at step 802. The mixture is allowed to separate into two phases at step 803, and the hypochlorite ion phase separated from the mixture, leaving the clean oil phase, at step 804. The hypochlorite ion source may then be recycled into the process as shown at step 806, and the clean hydrocarbon oil subjected to further processing as shown at step 805.

For example, the treated hydrocarbon oil can be washed with a polar solvent, which is expected to be capable of solubilizing at least a portion of any remaining reaction products from the oxidation/reaction of sulfur impurities by/with the hypochlorite ion source. If the same is desired, any aprotic polar solvent may be utilized, including those listed above in connection the discussion of a solvent for the phase transfer agent, i.e., acetonitrile, nitromethane, water, or combinations of these.

### Example #1

To a 250 ml Erlenmeyer flask, 5.58 g of fuel (Saudi oil or Coker oil, having an initial concentration of sulfur impurities of from about 3 wt% to about 3.6 wt%) was weighed. The oil was heated to 50 °C in a hot water bath. A phase-transfer agent solution was prepared by dissolving 0.0116 g of Cetyltrimethylammonium bromide (CETAB) [CAS# 57-09-0; CH₃(CH₂)₁₅N(CH₃)₃Br ; FW = 364.46] in 3 g of DI water. The agent solution was added to the oil at ∼50 °C and mixed vigorously. 165 ml of bleach (calcium hypochlorite at 51g/liter concentration) at 50 °C was used to extract the sulfur-containing impurities from the mixture by shaking the mixture in a 250 ml separatory funnel. The mixture was then allowed to stand for five minutes, resulting in the formation of two phases which were then separated by decanting off the hypochlorite ion source phase. Thereafter, the oil phase was emptied into a centrifuge tube and centrifuged at 2000 rpm for 10 minutes. The "clean oil" phase was submitted for total sulfur analysis.

### Example #2

To a 250 ml Erlenmeyer flask, 5.58 g of fuel (Saudi oil or Coker oil, having an initial concentration of sulfur impurities of from about 3 wt% to about 3.6 wt%) was weighed. The oil was heated to 50 °C in a hot water bath. A phase-transfer agent solution was prepared by dissolving 0.0116 g of Tetrabutylammonium bromide (TBAB) [CAS# 1643-19-2; (CH₃(CH₂)₃)₄N(Br); FW = 322.37] in 3 g of DI water. The agent solution was added to the oil at ∼50 °C and mixed vigorously. 165 ml of bleach (calcium hypochlorite at 51g/liter concentration) at 50 °C was used to extract the sulfur-containing impurities from the mixture by shaking the mixture in a 250 ml separatory funnel. The mixture was then allowed to stand for five minutes, resulting in the formation of two phases which were then separated by decanting off the hypochlorite ion source phase. After decanting off the aqueous phase, the oil phase was emptied into a centrifuge tube and centrifuged at 2000 rpm for 10 minutes. The "clean oil" phase was submitted for total sulfur analysis.

The data from Examples 1 and 2 is summarized below in Table 1.

**TABLE 1**

| Example | Oil | Phase transfer agent | Sulfur concentration in treated oil | |
|---|---|---|---|---|
| | | | µg/g | wt% S |
| 1 | Coker | CETAB | 26000 +/- 300 | 2.6 |
| 2 | Coker | TBAB | 16000+/- 300 | 1.6 |
| 3 | Saudi | TBAB | 13000 +/- 300 | 1.3 |
| 4 | Saudi | CETAB | 18000 +/- 300 | 1.8 |

Further washing of sample 4 with 200 ml de-ionized water reduced the sulfur content to 1.6 wt%. As used herein, the term "washing" is meant to indicate that the water was added to the treated oil, the oil/water mixture agitated, allowed to separate into an oil phase and a water phase, and the oil and water phase separated.

While various embodiments of the present invention have been shown and described herein, it will be understood that such embodiments are provided by way of example only and not of limitation. Numerous variations, changes and substitutions will occur to those skilled in the art without departing from the teaching of the present invention. Accordingly, it is intended that the invention be interpreted within the full spirit and scope of the appended claims.

## Claims

1. A process for desulfurizing a hydrocarbon oil comprising:
providing a hydrocarbon oil comprising sulfur impurities (101,
mixing the hydrocarbon oil with a phase transfer agent and a hypochlorite ion source to provide a mixture (102), and
allowing the mixture to separate into an aqueous hypochlorite phase and a non-polar oil phase (103).

2. The process of claim 1, further comprising agitating the mixture prior to allowing the mixture to separate.

3. The process of claim 1 or 2, wherein the phase transfer agent comprises one or more cationic, anionic and nonionic surfactants.

4. The process of claim 3, wherein the phase transfer agent comprises one or more quaternary ammonium salts, quaternary phosphonium salts and crown ethers.

5. The process of claim 4, wherein the phase transfer agent comprises one or more of tetrabutyl ammonium bromide, tetrabutyl ammonium hydrogen sulfate, tributylmethyl ammonium chloride, benzyltrimethyl ammonium chloride, benzyltriethyl ammonium chloride, methyltricaprylyl ammonium chloride, dodecyltrimethyl ammonium bromide, tetraoctyl ammonium bromide, cetyltrimethyl ammonium chloride, cetyltrimethylammonium bromide and trimethyloctadecyl ammonium hydroxide.

6. The process of claim 5, wherein the phrase transfer agent comprises cetyltrimethylammonium bromide (CETAB), tetrabutylammonium bromide (TBAB) or a combination of these.

7. The process of any of the preceding claims, wherein the phase transfer agent is provided in an amount of from about 0.01 wt % to about 1 wt% based upon the weight of the hypochlorite ion source.

8. The process of any of the preceding claims, wherein the phase transfer agent is provided in solution.

9. The process of claim 8, wherein the phase transfer agent is provided in solution with water, in a concentration of from about 0.05 wt% to about 0.5 wt%.

10. The process of any of the preceding claims, wherein the hypochlorite ion source comprises sodium hypochlorite, calcium hypochlorite, or a combination of these.

11. The process of any of the preceding claims, further comprising separating the phases.

12. The process of claim 11, wherein the hydrocarbon oil and/or hypochlorite ion source is/are recycled to the process.

13. The process of claim 11, wherein the hydrocarbon oil and/or hypochlorite ion source is/are recycled to a different process/point of use.

14. The process of any of the preceding claims, wherein the hydrocarbon oil is processed further by washing with a polar solvent.

15. The process of any of the preceding claims, wherein the residual sulfur content of the hydrocarbon oil after the process is less than about 3 wt%.
